# EUROPÄISCHE PATENTANMELDUNG

(11) **EP 4 199 300 A1**
(43) Veröffentlichungstag der Anmeldung: **21.06.2023**
(21) Anmeldenummer: 22212167.5
(22) Anmeldetag: 08.12.2022
(51) Int. Cl.: H02J 7/00

(54) **BATTERIELADEVORRICHTUNG UND LADEVERFAHREN MIT TEMPERATURKOMPENSATION**

(30) Priorität: 17.12.2021 DE 102021133613
(71) Anmelder: Tridonic GmbH & Co. KG, 6851 Dornbirn (AT)
(72) Erfinder: WILSON, Ian, 6850 Dornbirn (AT)
(74) Vertreter: Beder, Jens

(57) **Zusammenfassung**

Ein Verfahren zur Steuerung einer Batterieladevorrichtung für einen Ladevorgang eines Energiespeichers mit zumindest einer Zelle auf Lithium-Basis umfasst die Schritte:
Ermitteln einer Zellspannung der Zelle und Zuführen eines konstanten Ladestroms an die Zelle, wenn die ermittelte Zellspannung kleiner als ein erster Schwellenwert ist, sowie Überwachen der Zellspannung. Wenn die überwachte Zellspannung größer als ein zweiter Schwellenwert ist, erfolgt Zuführen eines Ladestroms kleiner als der konstante Ladestrom an die Zelle und Überwachen der Zellspannung. Das Verfahren ermittelt eine Temperatur des Energiespeichers und stellt den zweiten Schwellenwert in Abhängigkeit von der ermittelten Temperatur des Energiespeichers ein.

## Beschreibung

Die Erfindung bezieht sich auf Ladeverfahren für Akkumulatoren auf Lithium-Basis und insbesondere auf Ladeverfahren für Akkumulatoren mit Zellen in Lithium-Eisen-Phosphat-Technologie. Es wird ein Verfahren zur Steuerung eines Ladevorgangs, eine entsprechende Batterieladevorrichtung und eine entsprechende Notstromversorgung für ein Beleuchtungssystem vorgeschlagen.

Akkumulatoren ("Sekundärbatterien") mit Zellen ("Sekundärzellen"), die als elektrochemische Speicherelemente auf der Basis von Lithium-Verbindungen und Lithium-Ionen ausgebildet sind, werden aufgrund ihrer hohen Leistungsdichte und geringem Gewicht vielfach in mobilen Anwendungen eingesetzt.

Lithium-Eisenphosphat-Akkumulatoren (LiFePO₄-Akkumulatoren, LFP-Akku) sind eine spezifische Ausbildung der Lithium-Ionen-Akkumulatoren mit einer Zellspannung (Nennspannung) der einzelnen Zelle von 3.2 oder 3.3 V, der verglichen mit anderen Formen der Lithium-Ionen-Akkumulatoren, eine geringere Energiedichte aufweist und eine bessere Resistenz gegen thermisches Durchgehen zeigt. Weiter zeichnet sich der LFP-Akku durch einen niedrigen Selbstentladestrom, ein Fehlen des Memory-Effekts aus, und verzichtet auch auf das seltene Element Kobalt, womit günstige Herstellkosten und Schonung natürlicher Ressourcen verbunden sind. Nachteilig ist allerdings, dass der LFP-Akku bei niedrigen Temperaturen schnell an Leistung verliert.

Die Eigenschaften des LFP-Akku führen dazu, dass er nicht nur in mobilen Anwendungen, beispielweise für batterie-gestützte Fahrzeuge, zum Einsatz gelangt, sondern auch für Anwendungen der Gebäudetechnik, wie insbesondere Notlichtsystemen und Fluchtweganzeigesystemen, in Betracht gezogen wird.

Ladeverfahren für Akkumulatoren auf Lithium-Basis beruhen typischerweise auf Konstant-StromAlgorithmen (englisch: constant current-algorithm; abgekürzt: CC- Algorithmus oder CC - Ladeverfahren), oder Konstant-Strom-Konstant-Spannungs-Algorithmen (englisch: constant currentconstant voltage-algorithm; abgekürzt: CC-CV-Algorithmus oder CC-CV-Ladeverfahren).

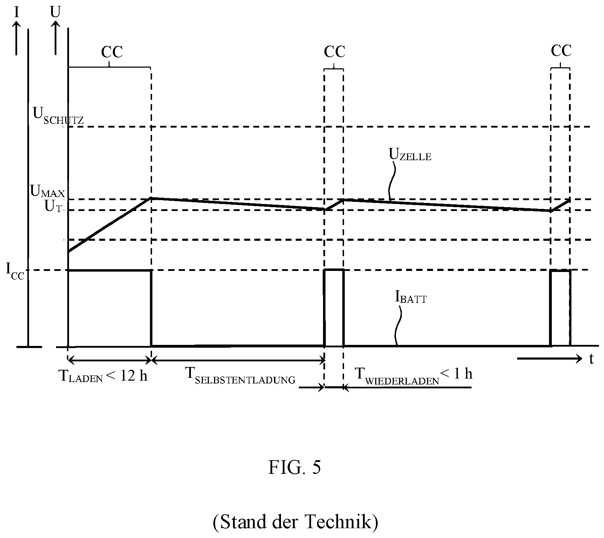

Fig. 5 gibt typische Spannungs- und Stromverläufe für ein CC-Ladeverfahren wieder. Fig. 5 zeigt einen konstanten Ladestrom bis zu Erreichen einer Spannungsschwelle U_{MAX}. Die Spannungsschwelle U_{MAX} liegt typisch bei 3.6 V. Bei Erreichen der Spannungsschwelle U_{MAX} wird der Ladestrom unmittelbar abgeschaltet, oder verringert und dann abgeschaltet. Ein Laden mit konstantem Strom ohne Beachten der Spannungsschwelle U_{MAX} würde eine lokale Schutzeinrichtung aktivieren.

Eine Batterieladevorrichtung, die ein CC- oder ein CC-CV-Ladeverfahren anwendet, ist auf die im ungünstigsten Fall zu erwartenden thermischen Bedingungen während des Ladens auszulegen, d. h. auf eine maximal auftretende Leistung Pₘₐₓ = Vₘₐₓ × Iₘₐₓ. Elektrische Komponenten der Batterieladevorrichtung sind daher auf hohe Leistungen auszulegen, und müssen geeignet sein, hohe Spitzentemperaturen bewältigen zu können. Hohe Spitzentemperaturen in Betrieb einer Baugruppe können die Lebensdauer der elektrischen Baugruppe verringern. Zugleich vergrößern die erhöhten Anforderungen an die zu verwendenden elektrischen Komponenten die Kosten für die Batterieladevorrichtung zusätzlich.

Eine Verringerung des von der Batterieladevorrichtung dem Akku zugeführten Ladestroms und damit der dem Akkumulator zugeführten Ladeleistung während des Ladevorgangs kann die leistungsmäßigen Anforderung an die Komponenten der Batterieladevorrichtung zwar verringern, jedoch geht damit eine Verlängerung des Ladevorgangs für den Akkumulator einher.

Insbesondere im Bereich von Notsystemen der Gebäudetechnik kann durch den Gesetzgeber eine zulässige maximale Ladedauer für die eingesetzte Kombination aus Batterieladevorrichtung und Akkumulator, zum Beispiel 24 Stunden, vorgeschrieben sein. Damit entsteht jedoch die Möglichkeit, dass bei Ablauf der vorab festgelegten maximalen Ladedauer der Akkumulator noch nicht bis zu einem maximalen Ladezustand, oder zumindest bis zu einem vorab festgelegten Ladezustand des Akkumulators, aufgeladen ist.

Es besteht daher die Aufgabe, eine Batterieladevorrichtung und ein Batterieladeverfahren bereitzustellen, die in Herstellung und Betrieb kostengünstig sind, und zugleich den vorgegebenen technischen Anforderungen an Gebäudetechniksysteme, und insbesondere auch an eine maximal zulässige Ladedauer entsprechen.

Das Ladeverfahren nach einem ersten Aspekt der Erfindung, die Batterieladevorrichtung nach einem zweiten Aspekt, und die Notstromversorgung für ein Beleuchtungssystem nach einem dritten Aspekt lösen die gestellte Aufgabe.

Die abhängigen Ansprüche definieren weitere vorteilhafte Ausführungen der Erfindung.

Einem ersten Aspekt zufolge betrifft die Erfindung ein Verfahren zur Steuerung einer Batterieladevorrichtung für einen Ladevorgang zumindest eines Energiespeichers mit zumindest einer Zelle auf Lithium-Basis. Das Verfahren umfasst zunächst Ermitteln einer Zellspannung der Zelle. Wenn die ermittelte Zellspannung kleiner als ein erster Schwellenwert ist, wird der Zelle ein konstanter Ladestrom zugeführt und die Zellspannung überwacht. Wenn die Zellspannung größer als ein zweiter Schwellenwert ist, erfolgt Zuführen eines Ladestroms kleiner als der konstante Ladestrom an die Zelle und Überwachen der Zellspannung. Das Verfahren zeichnet sich dadurch aus, dass das Verfahren eine Temperatur des Energiespeichers ermittelt, und den zweiten Schwellenwert U_{T2} in Abhängigkeit von der ermittelten Temperatur einstellt.

Das Verfahren ermöglicht es der Batterieladevorrichtung, den Energiespeicher in zumindest zwei hinsichtlich des dem Energiespeicher zugeführten Ladestrom unterschiedlichen Phasen zu laden. Der bei geringeren Zellspannungen konstante (erste) Ladestrom ("CC-Phase") ist größer als der (zweite) Ladestrom, der definitionsgemäß einen geringeren Wert als der konstante (erste) Ladestrom aufweist, und der bei Zellspannungen oberhalb des zweiten Schwellenwerts dem Energiespeicher zugeführt wird ("CP-Phase"). Damit kann die dem Energiespeicher zugeführte Ladeleistung insbesondere in der C-Phase entsprechend geringer eingestellt werden, und die Batterieladevorrichtung und deren Komponenten, insbesondere Komponenten eines Konverter-Schaltkreises, können auf entsprechend geringere elektrische Leistungen ausgelegt werden. Es treten während eines Ladevorgangs entsprechend geringere Spitzenwerte für die Temperatur auf, so dass die erwartete Lebensdauer der Baugruppen entsprechend höher ausfallen wird. Obwohl die CP-Phase oberhalb des zweiten Schwellenwerts den Ladevorgang mit einem gegenüber der ersten Phase reduzierten Ladestrom fortsetzt, kann einer eine insbesondere für niedrige Umgebungstemperaturen zu erwartende unvollständige Ladezustands des Energiespeichers bei Erreichen einer vorbestimmten maximalen Ladedauer durch die entsprechend einer Temperatur einstellbaren (variablen) zweiten Schwellenwert Rechnung getragen werden.

Da übliche Energiespeicher mit Zellen auf Lithium-Basis oftmals bereits einen Temperatursensor, zum Beispiel einen NTC-Widerstand aufweisen, ist die Erfassung einer Temperatur des Energiespeichers ohne zusätzliche Bauelemente einfach und ohne zusätzliche Kosten zu realisieren. Dies trifft insbesondere auch deshalb zu, da bekannte Batterieladevorrichtungen bereits eine Schnittstelle für den Temperatursensor des Energiespeichers aufweisen, um bestimmte Schutzfunktionen und Dokumentationsfunktionen zu verwirklichen.

Das Verfahren einer bevorzugten Ausführung vergrößert für geringere Werte der ermittelten Temperatur des Energiespeichers den zweite Schwellenwert.

Somit wird eine temperaturabhängige Verlängerung der Phase des Ladens mit kontantem Strom im Verhältnis zu der Dauer des Ladevorgangs bewirkt, womit auch für zunehmend tiefere Temperaturen zuverlässig höhere Kapazitäten des Energiespeichers erreichbar werden. Es können Batterieladegeräte für in Richtung tiefer Temperaturen erweiterte Temperaturbereiche bereitgestellt werden.

In einer Ausführung des Verfahrens wird, wenn die überwachte Zellspannung gleich oder größer als eine maximale Ladespannung ist, die maximalen Ladespannung an die Zelle angelegt und der der Zelle zugeführten Ladestrom überwacht. Wenn der überwachte Ladestrom kleiner oder gleich einem Zielstromwert ist, wird der Ladevorgang des Energiespeichers beendet.

Somit kann die Zelle vollständig geladen werden, ohne dass die dafür zugeführte Ladeleistung eine Auslegung der elektrischen Schaltkreise der Batterieladevorrichtung für sehr hohe Ladeströme erfordert. Die Elektronik der Batterieladevorrichtung kann entsprechend miniaturisiert werden. Ebenso wird der Ladevorgang des Energiespeichers zuverlässig beendet.

Das Verfahren kann in einer weiteren Ausführung den zweiten Schwellenwert zusätzlich in Abhängigkeit von einer ermittelten Temperatur der Batterieladevorrichtung zusätzlich zu der ermittelten Temperatur des Energiespeichers einstellen.

Damit wird für den Übergang von einem konstanten, jedoch höheren Ladestrom, zu dem Ladestrom mit verringerter Höhe die thermische Belastung der elektrischen Schaltkreise der Batterieladevorrichtung berücksichtigt. Eine verbesserte Lebensdauer der Batterieladevorrichtung und/oder eine effizientere Auslegung der Batterieladevorrichtung wird möglich.

Es ist vorteilhaft, wenn das Verfahren dann, wenn die ermittelte Temperatur des Energiespeichers und/oder der Batterieladevorrichtung einen festgelegten Temperaturgrenzwert unterschreitet, den Ladevorgang mit Zuführen des konstanten Ladestroms an die Zelle und Überwachen der Zellspannung fortsetzt, auch wenn die Zellspannung größer als der zweite Schwellenwert ist.

Damit wird der Ladevorgang über den gesamten Ladevorgang des Energiespeichers ausschließlich mit dem konstanten Ladestrom durchgeführt. Damit wird die Batterieladevorrichtung für besonders tiefe Werte der Umgebungstemperatur einsetzbar.

Das Verfahren nach einer bevorzugten Ausführung zeichnet sich dadurch aus, dass der zugeführte Ladestrom kleiner als der konstante Ladestrom abhängig von einer Zunahme der Zellspannung verringert wird.

Verringern des Ladestroms bei Zunahme der Zellspannung bewirkt, dass die Batterieladevorrichtung und insbesondere deren für Erzeugen des Ladestroms ausgelegter Konverter-Schaltkreis für die Erzeugung geringerer elektrischer Leistungen ausgelegt werden kann. Damit können die betreffenden Schaltkreise der Batterieladevorrichtung kompakter ausgelegt und miniaturisiert werden, ohne die Leistungsfähigkeit der Batterieladevorrichtung zu beeinträchtigen. Ebenso können mit einer, im Wesentlichen unverändert dimensionierte elektrische Schaltkreise aufweisenden Batterieladevorrichtung Energiespeicher mit größer dimensionierten Zellen, die Zellgröße 26650 sei hier als Beispiel genannt, geladen werden.

Der zugeführte Ladestrom kleiner als der konstante Ladestrom kann insbesondere auch abhängig von einer Zunahme der Zellspannung derart verringert werden, dass eine der Zelle zugeführte Ladeleistung konstant ist.

Somit wird erreicht, dass der Ladestrom in der Phase des Ladevorgangs, bei der die Zellspannung oberhalb des zweiten Schwellenwerts liegt, eine durch die zunehmende Zellspannung und die durch eine maximal zulässige Ladeleistung gegebenen Grenzen optimal ausnutzt.

In einer weiteren Ausführung kann das Verfahren ausgelegt sein, den konstanten Ladestrom in Abhängigkeit von einem vorgegebenen minimalen Ladezustand des Energiespeichers, und/oder in Abhängigkeit von einer vorgegebenen herstellungsbedingten Toleranz für den vorgegebenen minimalen Ladezustand des Energiespeichers bestimmen.

Somit kann der für Werte unterhalb des zweiten Schwellwerts verwendete Ladestrom entsprechend der zu ladenden elektrischen Energie angepasst werden, wobei die Dimensionierung der elektrischen Schaltkreise der Batterieladevorrichtung insbesondere durch die getrennt von dem konstanten Ladestrom für die, insbesondere konstante Ladeleistung bei Zellspannungen größer als der zweite Schwellenwert bestimmt wird.

Es ist vorteilhaft, wenn das Verfahren den konstanten Ladestrom größer als ein entsprechender Ladestrom eines bekannten CC-CV Ladealgorithmus bestimmt, insbesondere größer als ein auf eine Kapazität C des Energiespeichers normierter Ladestrom von 0.086C bis 0.1C.

Infolge der Phase des Ladevorgangs mit dem gegenüber dem konstanten Ladestrom verringertem Ladestrom für Zellspannungen oberhalb des temperaturabhängigen zweiten Schwellenwerts kann bei geringen Zellspannungen mit hohen Werten für den Ladestrom geladen werden, ohne dass die Dimensionierung der elektrischen Schaltkreise der Batterieladevorrichtung gegenüber einem CC-CV-Ladevorgang für entsprechend höhere Ladeleistungen, auszulegen ist.

Ein zweiter Aspekt der Erfindung betrifft eine Batterieladevorrichtung für einen Energiespeicher, wobei der Energiespeicher zumindest eine Zelle auf Lithium-Basis aufweist. Die Batterieladevorrichtung umfasst eine Batterieschnittstelle ausgelegt für eine Verbindung zu dem Energiespeicher, einen Konverter-Schaltkreis ausgelegt dafür, abhängig von einem Ladesteuersignal einen Ladestrom für den Energiespeicher zu erzeugen und über die an die angeschlossene Batterieladevorrichtung auszugeben, und einen Steuerschaltkreis ausgelegt dafür, eine Zellspannung der Zelle und den dem Energiespeicher zugeführten Ladestrom zu erfassen, und das Ladesteuersignal auf Basis der erfassten Zellspannung und des erfassten Ladestroms zu erzeugen und dem Konverter-Schaltkreis 2 zuzuführen. Der Konverter-Schaltkreis ist dafür ausgelegt, wenn die erfasste Zellspannung kleiner als ein erster Schwellwert ist, einen konstanten Ladestrom über die Batterieschnittstelle auszugeben, und wenn die erfasste Zellspannung größer als ein zweiter Schwellenwert ist, einen Ladestrom kleiner als der konstante Ladestrom über die Batterieschnittstelle auszugeben. Die Batterieladevorrichtung zeichnet sich dadurch aus, dass der Steuerschaltkreis dafür ausgelegt ist, über die Batterieschnittstelle ein Temperaturmesssignal des Energiespeichers zu erfassen, und den zweiten Schwellenwert in Abhängigkeit von einer ermittelten Temperatur des Energiespeichers einzustellen.

Die Batterieladevorrichtung kann insbesondere ausgebildet sein, das Verfahren zur Steuerung der Batterieladevorrichtung nach einer der Ausführungen des ersten Aspekts der Erfindung auszuführen.

Die Notstromversorgung für ein Beleuchtungssystem nach einem dritten Aspekt der Erfindung umfasst zumindest einen Energiespeicher auf Lithium-Basis und zumindest eine Batterieladevorrichtung entsprechend dem zweiten Aspekt der Erfindung.

Die Erfindung wird anhand der beigefügten Figuren nachstehend erläutert. Es zeigen
- Fig. 1: eine Anordnung umfassend eine Batterieladevorrichtung und einen Energiespeicher gemäß einer Ausführung,
- Fig. 2: ein vereinfachtes Ablaufdiagramm eines Verfahrens zur Steuerung eines Ladevorgangs eines Energiespeichers gemäß einer Ausführung,
- Fig. 3: eine vereinfachte Darstellung von Batteriestrom- und Batteriespannungsverläufen während eines Ladevorgangs eines Energiespeichers gemäß einer Ausführung,
- Fig. 4: eine vereinfachte Darstellung des Zusammenhangs zwischen der Batteriespannung und der Batteriekapazität für ausgewählte Temperaturen des Energiespeichers, und
- Fig. 5: ein Beispiel für Batteriestrom- und Batteriespannungsverläufen während eines Ladevorgangs eines Energiespeichers gemäß einer bekannten Ausführung einer Batterieladevorrichtung.

In den Figuren bezeichnen gleiche Referenzzeichen gleiche oder einander entsprechende Elemente. Auf eine Erläuterung gleicher Referenzzeichen in unterschiedlichen Figuren wird, soweit ohne Einschränkung der Klarheit möglich, zugunsten einer knappen Darstellung verzichtet.

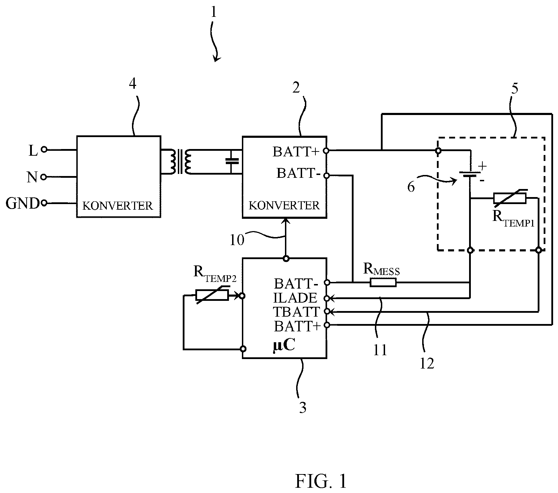

Fig. 1 zeigt eine Anordnung umfassend eine Batterieladevorrichtung 1 und einen Energiespeicher 5 gemäß einer Ausführung.

Die Batterieladevorrichtung 1 ist für das Laden des Energiespeichers 5 auf Lithium-Basis ausgelegt.

Die Batterieladevorrichtung 1 umfasst in einer eingangsseitigen Schnittstelle (Netzschnittstelle) Anschlüsse für Phase L, Nullleiter N, und Schutzleiter GND einer Wechselspannungs-Netzstromversorgung.

Alternativ oder zusätzlich kann die Batterieladevorrichtung 1 über Eingänge für eine Gleichstromversorgung, beispielsweise gestützt auf weitere Energiespeicher oder gleichstromerzeugende Einrichtungen der Energieversorgung aufweisen.

Ferner weist die Batterieladevorrichtung 1 in einer Batterieschnittstelle Anschlüsse für die Verbindung zu dem Energiespeicher 5 auf. Die Anschlüsse der Batterieschnittstelle umfassen insbesondere die Anschlüsse BATT+ und BATT- ausgelegt dafür, dem Energiespeicher 5 einen Batterieladestrom zuzuführen. Weiter umfassen die dargestellten Anschlüsse der Batterieschnittstelle der Batterieladevorrichtung 1 zum Anschluss des Energiespeichers 5 einen Anschluss TBATT für die Zuführung eines Temperaturmesssignals 12 von dem Energiespeicher 5 an die Batterieladevorrichtung 1. Üblicherweise ist eine Temperaturmesseinrichtung, dargestellt in fig. 1 ist ein temperaturabhängiger Widerstand, insbesondere ein NTC Widerstand R_{TEMP1}, ist ein Element des gezeigten Energiespeichers 5. Ein temperaturabhängiger Spannungsabfall über den NTC Widerstand R_{TEMP1} kann der Batterieladevorrichtung 1 als Temperaturmesssignal 12 zugeführt werden.

Ferner ordnet die in Fig. 1 gezeigte Batterieladevorrichtung 1 einen Strommesswiderstand R_{MESS} (englisch: Shunt) in der Verbindung BATT- zu dem Energiespeicher 5 an. Ein Spannungsabfall über den Strommesswiderstand R_{MESS} kann in der Batterieladevorrichtung 1 als Strommesssignal 11 einem Steuerschaltkreis 3 zugeführt werden.

Die in Fig. 1 dargestellten Batterieladevorrichtung 1 weist einen AC/DC-Konverter 4 auf, der zum Beispiel als Sperrwandler (Flyback-Konverter) ausgebildet ist, und an seinem Eingang mit den Eingangsanschlüssen L, N und GND verbunden ist. Der Eingangskonverter 4 erzeugt eine Busspannung, die einem DC/DC-Konverter 2 zugeführt wird. Der DC/DC-Konverter 2, beispielsweise ausgebildet als Tiefsetzsteller (Abwärtsregler, engl.: buck converter), erzeugt einen Batterieladestrom gesteuert von einem Ladesteuersignal 10. Der DC/DC-Konverter 2 führt den erzeugten Batterieladestrom über die Anschlüssen BATT+ und BATT- der Batterieladevorrichtung 1 dem Energiespeicher 5 zu.

Die Steuerung des DC/DC-Konverter 2 erfolgt durch den Steuerschaltkreis 3 mit dem Ladesteuersignal 10.

Der Steuerschaltkreis 3 kann als integrierter Halbleiterschaltkreis, als anwendungsspezifischer Schaltkreis (ASIC), als Mikrokontroller, oder bevorzugt unter Verwendung eines Mikroprozessors aufgebaut sein.

Der Steuerschaltkreis 3 weist nach Fig. 1 weiter einen Temperatursensor, zum Beispiel ausgebildet als NTC-Widerstand R_{TEMP2}, auf. Alternativ oder zusätzlich kann Steuerschaltkreis 3, insbesondere dann, wenn dieser als Mikroprozessor ausgebildet ist, einen internen Temperatursensor aufweisen.

Der Temperatursensor des Steuerschaltkreises 3 ermöglicht dem Steuerschaltkreis 3, die Temperatur der Batterieladevorrichtung 1 zu ermitteln.

Weiter werden dem Steuerschaltkreis 3 über die Anschlüsse TBATT und ILADE der Batterieladevorrichtung 1 das Temperaturmesssignal 12 des Energiespeichers 5 sowie das Strommesssignal 11 zugeführt.

Auf der Grundlage des Temperaturmesssignals 12 des Energiespeichers 5 kann der Steuerschaltkreis 3 die Temperatur T_{LADE} des Energiespeichers 5 ermitteln.

Auf der Grundlage des Strommesssignals 11 kann der Steuerschaltkreis 3 den dem Energiespeichers 5 zugeführten Ladestrom ermitteln.

Ferner ermittelt der Steuerschaltkreis 3 einen Wert für die über Anschlüsse BATT+ und BATT- des DC/DC-Konverters

2 an den Energiespeicher 5 anliegende Batterieladespannung.

In Fig. 1 weist der Energiespeicher 5 eine einzelne Zelle 6 auf. Die dargestellte Ausführung des Energiespeichers 5 mit einer Zelle 6 ist lediglich eine beispielhafte Darstellung. Der Energiespeicher 5 kann eine Mehrzahl einzelner Zellen 6, wobei die Zellen 6 in einer Parallelschaltung oder in einer Serien-Parallelschaltung angeordnet sind, aufweisen. Insbesondere kann der Energiespeicher 5 bis zu sechs Zellen 6 umfassen.

In Figur 1 entspricht eine an den Energiespeicher 5 über Anschlüsse BATT+ und BATT- angelegte Batterieladespannung im Wesentlichen einer Zellspannung der Zelle 6 und über die Anschlüsse BATT+ und BATT- dem Energiespeicher 5 zugeführte Batterieladestrom im Wesentlichen einem Zellladestrom der Zelle 6.

Somit ist der Steuerschaltkreis 3 insbesondere ausgebildet, einen Wert für die Zellspannung der Zelle 6 des Energiespeichers 5 zu ermitteln, einen Wert für den Ladestrom für die Zelle 6 zu ermitteln, und damit auch einen Wert für die der Zelle 6 zugeführte Ladeleistung zu bestimmen.

Der Steuerschaltkreis 3 ist insbesondere ausgebildet, dass Ladeverfahren nach dem ersten Aspekt der Erfindung entsprechend jedem der dargestellten Ausführungsbeispielen auszuführen und den Betrieb der Batterieladevorrichtung 1 mittels eines Ladesteuersignals 10 auf Basis der ermittelten Werte für die Zellspannung der Zelle 6, für den Ladestrom für die Zelle 6 und für die der Zelle 6 zugeführte Ladeleistung zu steuern.

Die Batterieladevorrichtung 1 kann ferner Datenspeicher aufweisen. Der oder die Datenspeicher speichern Programmdaten zur Ausführung durch den Steuerschaltkreis 3, Steuerdaten für die Steuerung des DC/DC- Konverters 2, und stellen einen für eine Ausführung eines Programms (Computerprogramm) erforderlichen Arbeitsspeicher bereit. Das Programm kann insbesondere ein Programm zur Ausführung des Verfahrens zum Laden des Energiespeichers 5 durch die Batterieladevorrichtung 1 sein.

Der Energiespeicher 5 auf Lithium-Basis kann zumindest eine Lithium-Ionen-Zelle, zum Beispiel eine Lithium-Eisenphosphat-Zelle (LFP-Zelle) aufweisen. Der Energiespeicher 5 kann eine Anzahl S Zellen 6 in Serie in einer Anzahl P paralleler Zellenstränge aufweisen. Bekannte Akkumulator-Konfigurationen umfassen die Konfigurationen 2s1p, 2s2p, 3s1p oder 3s2p entsprechend {S=2; P=1}, {S=2; P=2}, {S=3; P=1} oder {S=3; P=2}.

Die Batterieladevorrichtung 1 nach Fig. 1 weist den Strommesswiderstand R_{MESS} auf, der in Serie zu der Zelle 6 geschaltet ist. Eine über den Strommesswiderstand R_{MESS} abfallende Spannung wird an den Anschluss ILADE als Strommesssignal 11 dem Steuerschaltkreis 3 zugeführt.

Der Strommesswiderstand R_{MESS} ist in der Regel als Teil der Batterieladevorrichtung 1 innerhalb eines Gehäuses der Batterieladevorrichtung 1 und somit intern in dieser angeordnet. Alternativ kann der Strommesswiderstand R_{MESS} Bestandteil des Energiespeichers 5 sein. In diesem Fall wird eine über den Strommesswiderstand R_{MESS} abfallende Spannung als Strommesssignal 11 an einen Anschluss ILADE des Steuerschaltkreises 3 zugeführt.

Der Energiespeicher 5 weist einen Temperatursensor auf. Der Temperatursensor kann zum Beispiel als temperaturabhängiger Widerstand, insbesondere als NTC Widerstand R_{TEMP1}, ausgebildet sein. Eine über den NTC Widerstand R_{TEMP1} abfallende Spannung wird als Temperaturmesssignal 12 an den Anschluss TBATT dem Steuerschaltkreis 3 zugeführt.

Der Temperatursensor des Energiespeichers 5 ermöglicht somit dem Steuerschaltkreis 3, einen Wert für die Temperatur T_{BATT} des Energiespeichers 5 zu ermitteln.

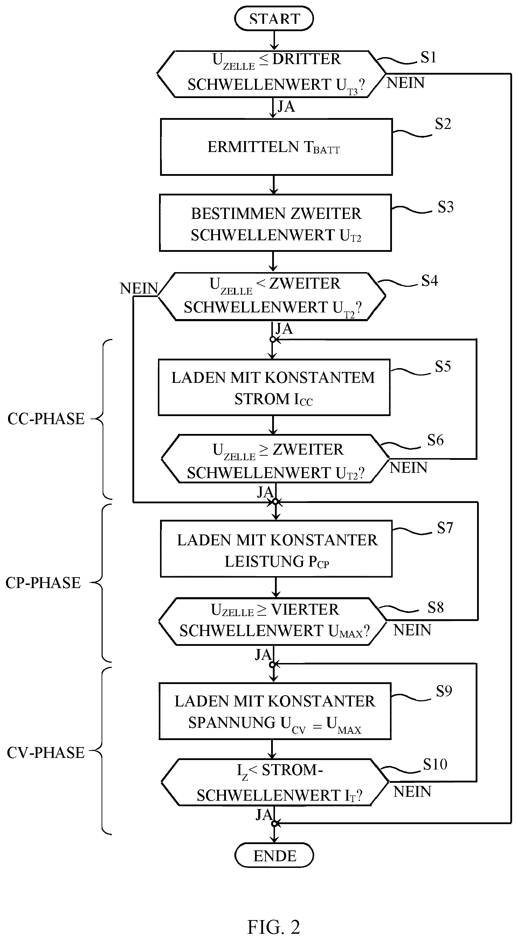

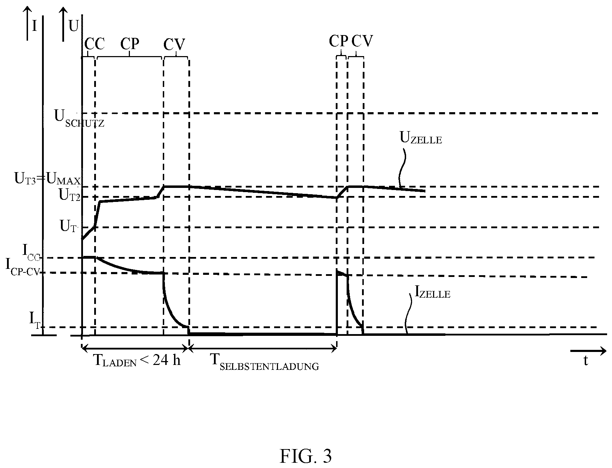

Fig. 2 stellt ein vereinfachtes Ablaufdiagramm eines Verfahrens zur Steuerung eines Ladevorgangs eines Energiespeichers 5 gemäß einer Ausführung dar. Fig. 3 zeigt Beispiele für Batteriestrom- und Batteriespannungsverläufe während des Ladevorgangs eines Energiespeichers 5 mittels der Batterieladevorrichtung 1 gemäß dem Ladeverfahren nach Fig. 2.

Nicht dargestellt in Fig. 2 ist ein vorangegangener Schritt des Verfahrens, in dem der Energiespeicher 5 mittels der Batterieschnittstelle der Batterieladevorrichtung 1 mit der Batterieladevorrichtung 1 verbunden wird.

Das Verfahren beginnt mit Schritt S1, indem zunächst ein aktueller Wert für die Zellspannung U_{ZELLE} erfasst wird. Anschließend wird in Schritt S1 der erfasste Wert für die Zellspannung U_{ZELLE} mit einem dritten Schwellenwert U_{T3} verglichen. Ist der aktuelle Wert der Zellspannung U_{ZELLE} größer als der dritte Schwellenwert U_{T3}, so ist das Ergebnis in Schritt S3 NEIN. Ist das Ergebnis des Schritts S3 NEIN, so wird der Ladezustand des Energiespeichers 5 als ausreichend bestimmt, und es wird kein Ladevorgang begonnent.

Ist hingegen in Schritt S1 die Antwort JA, gleichbedeutend mit der Feststellung, dass der aktuelle Wert der Zellspannung U_{ZELLE} kleiner als der dritte Schwellenwert U_{T3} ist, oder gleich dem dritten Schwellenwert U_{T3} ist, so wird der Ladeverfahren mit Schritt S2 begonnen.

Das Ladeverfahren ermittelt darauf in Schritt S2 eine Temperatur T_{BATT} des Energiespeichers 5.

Anschließend wird in Schritt S3 in Abhängigkeit von der ermittelten Temperatur T_{BATT} ein aktueller Wert für den zweiten Schwellenwert U_{T2} bestimmt.

In Schritt S4 wird der aktuelle Wert der Zellspannung U_{ZELLE} aus Schritt S1 mit dem in Schritt S3 bestimmten zweiten Schwellenwert U_{T2} verglichen. Ist der aktuell ermittelte Wert der Zellspannung U_{ZELLE} kleiner als der zweite Schwellenwert U_{T2}, ist also die Antwort in Schritt S4 JA, so wird das Ladeverfahren mit Schritt S5 fortgesetzt. Ist hingegen die Antwort in Schritt S4 NEIN, gleichbedeutend damit, dass der aktuell ermittelte Wert der Zellspannung U_{ZELLE} größer oder gleich dem zweiten Schwellenwert U_{T2} ist, so wird das Ladeverfahren im Anschluss an Schritt S4 mit dem Schritt S7 fortgesetzt.

Die Schritte S5 und S6 sind Teil einer erste Phase (CC-Phase) des Ladeverfahrens, in der der Energiespeicher 5 mit einem konstanten Ladestrom I_{CC} geladen wird. Während des Ladens in Schritt S5, wird die Zellspannung U_{ZELLE} überwacht. In Schritt S6 wird überprüft, ob der aktuelle Wert der Zellspannung U_{ZELLE} größer oder gleich dem zweiten Schwellenwert U_{T2} ist. Ist der aktuelle Wert der Zellspannung U_{ZELLE} kleiner als der zweite Schwellenwert U_{T2}, so wird das Verfahren nach Schritt S6 mit Schritt S5, also Laden des Energiespeichers 5 mit einem konstanten Ladestrom I_{CC} fortgesetzt.

Wird in Schritt S6 festgestellt, dass der aktuelle Wert der Zellspannung U_{ZELLE} größer oder gleich dem zweite Schwellenwert U_{T2} ist (JA), so wird das Verfahren mit Schritt S7 fortgesetzt. In diesem Fall wird die erste Phase des Ladens mit einem konstanten Ladestrom I_{CC} beendet und eine zweite Phase (CP-Phase) des Ladeverfahrens, in dem der Energiespeicher 5 mit einem Ladestrom I_{CP}, dessen Stromstärke geringer als die Stromstärke des konstanten Ladestroms I_{CC} in der ersten Phase ist, begonnen. Die Schritte S7 und S8 sind Teil der zweiten Phase (CP-Phase) des Ladeverfahrens, in der der Energiespeicher 5 mit einer konstanten Ladeleistung P_{CP} geladen wird.

In Schritt S7 wird der Energiespeicher 5 durch die Batterieladevorrichtung 1 mit dem Ladestrom I_{CP}, dessen Stromstärke geringer als die Stromstärke des konstanten Ladestroms I_{CC} in der ersten Phase ist, geladen. Während des Ladens in Schritt S7, wird die Zellspannung U_{ZELLE} überwacht. In Schritt S8 wird überprüft, ob der aktuelle Wert der Zellspannung U_{ZELLE} größer oder gleich als ein vierter Schwellenwert U_{MAX} ist. Ist der aktuelle Wert der Zellspannung U_{ZELLE} kleiner als der vierte Schwellenwert U_{MAX}, so wird das Verfahren nach Schritt S8 mit Schritt S7, also Laden des Energiespeichers 5 mit dem Ladestrom I_{CP} fortgesetzt.

Wird in Schritt S8 hingegen festgestellt, dass der aktuelle Wert der Zellspannung U_{ZELLE} größer oder gleich dem vierten Schwellenwert U_{MAX} ist (JA), so wird das Verfahren mit Schritt S9 fortgesetzt. In diesem Fall wird die zweite Phase des Ladeverfahrens mit dem Ladestrom I_{CP}, dessen Stromstärke geringer als die Stromstärke des konstanten Ladestroms I_{CC} der ersten Phase ist, beendet und eine dritte Phase des Ladeverfahrens (CV-Phase), in der an den Energiespeicher 5 eine konstante Spannung Ucv angelegt wird, deren Spannungswert im Wesentlichen dem Wert der Spannung U_{MAX} entspricht. Während des Ladens mit konstanter Spannung U_{CV} wird der dem Energiespeicher 5 zugeführte Strom I_{ZELLE} überwacht.

Wird in Schritt S10 im Anschluss an Schritt S9 festgestellt, dass der aktuelle Wert des Stroms I_{ZELLE} größer oder gleich einem Stromschwellenwert I_{T} ist, so wird das Ladeverfahren in der dritten Phase mit Schritt S9 fortgesetzt.

Die Schritte S9 und S10 sind Teil der dritten Phase (CV-Phase) des Ladeverfahrens, in der der Energiespeicher 5 mit einer konstanten Ladespannung Ucv geladen wird.

Wird in Schritt S10 im Anschluss an Schritt S9 festgestellt, dass der aktuelle Wert des Stroms I_{ZELLE} kleiner als der Stromschwellenwert I_{T} ist, so wird die dritte Phase (CV-Phase) des Ladevorgangs, und damit auch der gesamte Ladevorgang beendet. Der Energiespeicher 5, und dessen zumindest eine Zelle 6, ist nun vollständig geladen.

Fig. 3 zeigt eine vereinfachte Darstellung von Zellstrom- und Zellspannungsverläufen während eines Ladevorgangs eines Energiespeichers 5 gemäß einer Ausführung. Der Energiespeicher 5 für die Darstellung nach Fig. 3 umfasst eine Zelle 6 aufgebaut als LFP-Zelle.

Die Darstellung gilt in vollkommen entsprechender Weise für einen Energiespeicher 5 der eine Mehrzahl von Zellen in serieller- und/oder paralleler Anordnung umfasst. In diesen Fällen sind entsprechend der elektrische Verschaltung die Werte der Ladespannung U_{BATT} und der Ladestrom I_{LADE} ausgehend von den Werten für die Zellspannung U_{ZELLE} und des I_{ZELLE} der einzelnen Zelle 6 entsprechend anzupassen.

In Richtung der ersten (linken) Ordinate ist der Ladestrom I_{BATT}, hier entsprechend dem Ladestrom einer einzelnen Zelle I_{ZELLE}, aufgetragen. In Richtung der zweiten (rechten) Ordinate der Darstellung ist die Batteriespannung U_{BATT}, hier entsprechend der Zellspannung U_{ZELLE}, aufgetragen.

Die Darstellung beginnt für t = 0 mit einem Spannungswert der Zellspannung U_{ZELLE}, die unterhalb des dritten Schwellwerts U_{T3} und auch unterhalb des zweiten Schwellenwerts U_{T2} liegt. Somit wird ein Ladevorgang für den Energiespeicher 5 gestartet. Der Ladevorgang beginnt mit der ersten Phase (CC-Phase), also mit einem Zuführen eines konstanten Ladestrom I_{CC} durch die Batterieladevorrichtung 1 über die Batterieschnittstelle an den Energiespeicher 5. Die Batteriespannung U_{BATT} bzw. Zellspannung U_{ZELLE} wird überwacht und steigt entsprechend dem zunehmenden Ladezustand der Zelle 6 an.

Erkennt die Batterieladevorrichtung 1 fest, dass der erfasste Spannungswert der Zellspannung U_{ZELLE} den zweiten Schwellwert U_{T2} erreicht oder überschreitet, so erfolgt ein Übergang in die zweite Phase des Ladevorgangs, die CP-Phase.

Für einen Energiespeicher 5 der Bauform {2slp} oder {2s2p} kann der zweite Schwellenwert U_{T2} 5.33 V betragen.

Die CC-Phase des Ladevorgangs dauert somit an, bis das Produkt aus Batteriespannung U_{BATT} bzw. Zellspannung U_{ZELLE} und konstantem Ladestrom I_{CC} eine Zielleistung P_{TARGET} erreicht.

In der CP-Phase des Ladevorgangs führt die Batterieladevorrichtung einen Ladestrom I_{CP} mit einer Stromstärke, die unterhalb der konstanten Stromstärke des konstanten Ladestrom I_{CC} der CC-Phase liegt, über die Batterieschnittstelle dem den Energiespeicher 5 zu. In Fig. 3 ist ein Verlauf des Ladestroms I_{CP} gezeigt, der mit zunehmender Zeit und Zellspannung U_{ZELLE} abnimmt. Die dargestellten Verläufe entsprechen einem Laden der Zelle 6 mit konstanter (Lade-) Leistung in der CP-Phase des Ladevorgangs.

Die dargestellte CP-Phase des Ladevorgangs lädt den Energiespeicher 5 bzw. die Zelle 6 mit einer konstanten Ladeleistung, die der Zielleistung P_{TARGET} entspricht.

In der CP-Phase kann der Steuerschaltkreis 3 das Ladesignal 10 derart erzeugen und an den Konverter-Schaltkreis 2 ausgeben, dass der von dem Konverter-Schaltkreis 2 erzeugte und über die Batterieschnittstelle ausgegebene Ladestrom I_{CP} die dem Energiespeicher 5 zugeführte Ladeleistung P_{TARGET} konstant hält. Der Ladestrom fällt in der CP-Phase von der Stromstärke des konstanten Ladestroms I_{CC} bis auf eine Stromstärke I_{CP-CV} ab.

Die Batteriespannung U_{BATT} bzw. Zellspannung U_{ZELLE} wird überwacht und steigt entsprechend dem zunehmenden Ladezustand der Zelle 6 weiter an.

Die CP-Phase des Ladevorgangs dauert an, bis die durch die Batterieladevorrichtung 1 erfasste und überwachte Batteriespannung U_{BATT} bzw. Zellspannung U_{ZELLE} den vierten Schwellenwert U_{MAX} erreicht oder überschreitet.

Für einen Energiespeicher 5 der Bauform 2s1p oder 2s2p kann der vierte Schwellenwert U_{T3} 7.20 V betragen. Dies entspricht einer Spannung von 3.6 V je Zelle 6 bzw. einem Energiespeicher 5 mit einer einzelnen Zelle 6.

Erreicht oder überschreitet die erfasste und überwachte Batteriespannung U_{BATT} bzw. Zellspannung U_{ZELLE} den vierten Schwellenwert U_{MAX}, so wird die CP-Phase des Ladevorgangs beendet und der Ladevorgang wird mit der dritten Phase fortgesetzt (CV-Phase). In der CV-Phase legt bzw. regelt die Batterieladevorrichtung 1 die Batteriespannung U_{BATT} bzw. die Zellspannung U_{ZELLE} auf eine konstante Zellspannung U_{ZELLE} = U_{MAX} = Ucv und führt dem Energiespeicher 5 bzw. der Zelle 6 eine Ladestrom ICV zu, der ausgehend von der Stromstärke I_{CP-CV} weiter abfällt.

In der CV-Phase wird der Ladestrom I_{CV} erfasst und überwacht. Fällt die Stromstärke des Ladestroms I_{CV} unter eine Zielstromstärke I_{T} (Stromschwellenwert I_{T}), so wird die CV-Phase des Ladevorgangs beendet und der gesamte Ladevorgang abgeschlossen.

Auf der Abszisse der Darstellung nach Fig. 3 ist die Zeit t aufgetragen. Zwei Zeitperioden sind auf der Abszisse hervorgehoben. Zum einen ist eine maximale Ladezeit T_{LADEN} dargestellt. Es wird angenommen, dass aufgrund externer Vorgaben die maximale Ladezeit T_{LADEN} mit 24 h vorbestimmt ist. Unabhängig von einem Ladezustand SOC zu Beginn des Ladevorgangs ist jeder Ladevorgang binnen der vorbestimmten maximalen Ladezeit zu beenden. Dies ist eine übliche Vorgabe für sicherheitsrelevante Gebäudetechniksysteme wie zum Beispiel Notlichtsysteme. Entsprechende Vorgaben und Regeln können regional unterschiedlich sein.

Zum zweiten ist ein Zeitraum T_{SELBSTENTLADEN} dargestellt. Der Zeitraum T_{SELBSTENTLADEN} kann von mehreren Stunden bis zu mehreren Tagen betragen. Über diesen Zeitraum T_{SELBSTENTLADEN} fällt aufgrund des fallenden Ladezustands SOC des Energiespeichers 5 die Batteriespannung U_{BATT}, im betrachteten Fall die Zellspannung U_{ZELLE} der Zelle 6 langsam ab. Ist der Energiespeicher 5, hier umfassend die Zelle 6, mit der Batterieladevorrichtung 5 verbunden, fällt die Zellspannung U_{ZELLE} bis bei Unterschreiten des dritten Schwellenwerts U_{T3} ein erneuter Ladevorgang der Zelle 6 gestartet wird.

Für einen Energiespeicher 5 der Bauform 2s1p oder 2s2p kann die dritte Schwellenspannung U_{T3} 6.80 V betragen. Dies entspricht einer dritten Schwellenspannung U_{T3} = 3.40 V je Zelle 6 oder für eine einzelne Zelle 6.

In Fig. 3 ist in der rechten Teilfigur eine Wiederladevorgang für en Energiespeicher 5 gezeigt, der die CP-Phase gefolgt von der CV-Phase umfasst. Dieser Wiederladevorgang wird regelmäßig wiederholt werden, sowie die die Batteriespannung U_{BATT} bzw. Zellspannung U_{ZELLE} aufgrund der Selbstentladung den dritten Schwellenwerts U_{T3} unterschreitet, und bis ein weitergehende Entladung des Energiespeichers 5 einen vollständigen Ladevorgang umfassend die CC-Phase gefolgt von der CP-Phase und der CV-Phase erfordert.

In Fig. 3 eine Schutzspannung U_{SCHUTZ} gezeigt. Bei Erreichen dieser Schutzspannung U_{SCHUTZ} durch die Zellspannung U_{ZELLE} öffnet eine in dem Energiespeicher 5 angeordnete Schutzschaltung, die Teil einer Batteriemanagementschaltung ist, einen internen Schalter, um die Zelle 6 vor zu hohen und zerstörenden Spannungswerten zu schützen. Für die als LFP-Zelle aufgebaute einzelne Zelle 6 beträgt die Schutzspannung U_{SCHUTZ} typisch 3.90 V ± 0.05 V. Werte für die Zellspannung U_{ZELLE} während eines üblichen Ladevorgangs liegen mit einem Sicherheitsabstand unterhalb der Schutzspannung U_{SCHUTZ}. Der Sicherheitsabstand kann zum Beispiel zu 0.3 V gewählt werden. Damit wird sichergestellt, dass der Zellschutz während eines normalen Ladevorgangs nicht aktiviert wird. Das Batterieladeverfahren ist derart ausgelegt, dass während des Ladens die Zellspannung U_{ZELLE} stets Spannungswerte mit einem ausreichenden Abstand geringer als die Schutzspannung U_{SCHUTZ} aufweist, um eine Beschädigung der Zelle 6 auch bei Auftreten von Spannungsspitzen und Rippelspannungen zu vermeiden. Dies gilt insbesondere auch für die Wahl der ersten bis vierten Schwellenwerte des CC-CP-CV-Ladeverfahrens mit seiner ersten bis dritten Phase.

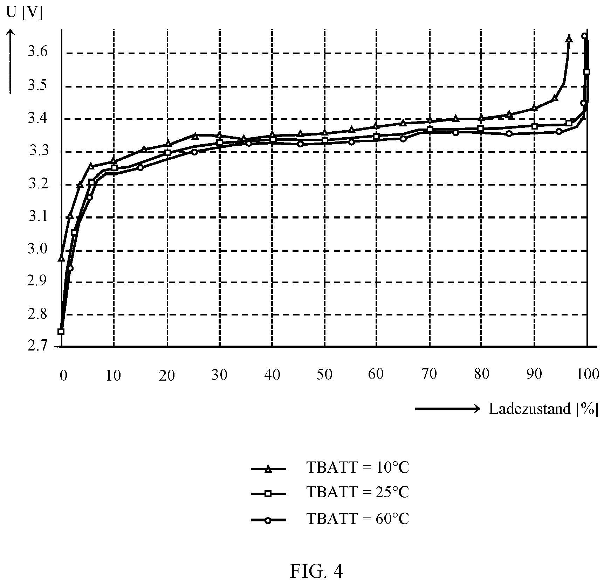

Fig. 4 gibt eine vereinfachte Darstellung des Zusammenhangs zwischen der Zellspannung und der Batteriekapazität bzw. des Ladezustands für ausgewählte Temperaturen T_{BATT} der Zelle 6 des Energiespeichers 5 wieder.

Die Verläufe des Zusammenhangs zwischen Zellspannung und Ladezustand für eine Temperatur T_{BATT} = 25°C und T_{BATT} = 60°C liegen in Fig. 4 nahe beieinander. Ein Ladevorgang nach dem CC-CP-CV-Verfahren für die LFP-Zelle wird daher bei fester Schaltschwelle für die Zellspannung zwischen CC-Bereich des CC-CP-CV-Verfahrens und CP-Bereich des CC-CP-CV-Verfahrens vergleichbare Ladezustände erreichen.

Anders der Verlauf des Zusammenhangs zwischen Zellspannung und Ladezustand für eine Temperatur T_{BATT} = 10°C. Der Verlauf für T_{BATT} = 10°C erreicht bei Zellspannungen beispielsweise lediglich einen Ladezustand von etwa 80%. Aus Fig. 3 wird somit erkennbar, dass, eine gleiche Schaltschwelle für die Zellspannung für den Übergang vom CC-Bereich des CC-CP-CV-Verfahrens zu dem CP-Bereich des CC-CP-CV-Verfahrens wie für die Verläufe bei T_{BATT} = 25°C und TBATT = 60°C vorausgesetzt, der Übergang eines Ladens mit hohen, konstantem Strom (CC) zu Laden mit konstanter Ladeleistung bei reduziertem Strom (CP) bei niedrigen Temperaturen deutlich früher erfolgt.

Wird der Ladestrom daher bei Übergang vom CC-Bereich zu dem CP-Bereich des CC-CP-CV-Verfahrens bei niedrigen Temperaturen bereits für eine Kapazität von 80 % einer Zelle bei höherer oder Raumtemperatur umgeschaltet oder niedriger geregelt, so wird die Kapazität der Zelle 6 bei Temperaturen unter 10°C signifikant geringer sein. Für diese geringen Temperaturen ist mit einem Fehler in einer Größenordnung von 30 bis 40 % zu rechnen.

Dies ist insbesondere kritisch, wenn die Batterieladevorrichtung 1 den Energiespeicher 5 innerhalb einer vorgegebenen Zeit, zum innerhalb längstens Beispiel 24 h, ausgehend von einer geringen Restladung zu laden hat. Der reduzierte Ladestrom in der CP-Phase verglichen mit dem konstanten Ladestrom der CC Phase des CC-CP-CV-Verfahrens kann möglicherweise einen vorgegebenen Ladezustand des Energiespeichers 5 vor Ablauf der vorgegebenen maximal zulässigen Ladedauer nicht erreichen.

Dies kann durch die temperaturabhängige Ausgestaltung des Schwellwerts für den Übergang vom CC-Bereich des CC-CP-CV-Verfahrens zu dem CP-Bereich des CC-CP-CV-Verfahrens vermieden werden.

Alternativ oder zusätzlich kann der Übergang von der CC-Phase des CC-CP-CV-Verfahrens zu der CP-Phase des vorgeschlagenen CC-CP-CV-Verfahrens für entsprechend niedrige Zelltemperaturen T_{BATT} des Energiespeichers 5 und/oder Temperaturen T_{LADE} der Batterieladevorrichtung 1 blockiert werden. Der Ladevorgang des Energiespeichers 5 wird in dieser Ausführung bei entsprechend geringen Temperaturen in einem CC-CV-Verfahren ausgeführt, um den Ladevorgang in Hinblick auf eine maximale Laderate zu optimieren.

Die Laderate eines Energiespeichers bezeichnet den Ladestrom bezogen auf die Kapazität des Energiespeichers. Die Größe des Ladestroms (oder des Entladestroms ist damit unabhängig von der Kapazität des Energiespeichers.

Die temperaturabhängige Ausgestaltung des Schwellwerts für den Übergang vom CC-Bereich des CC-CP-CV-Verfahrens zu dem CP-Bereich des CC-CP-CV-Verfahrens ermöglicht es darüber hinaus, LfP-Zellen und entsprechende Batterieladevorrichtungen 1 für in Richtung tiefer Betriebstemperaturen erweiterte Temperaturbereiche bereitzustelle. Eine Erweiterung einer unteren Grenze des Temperaturbereichs von 0°C bis zu -40°C für künftige Anwendungen unter vertretbarem Aufwand erscheint mit Nutzung der Erfindung erreichbar.

Fig.5 stellt ein einfaches Beispiel für Batteriestrom- und Batteriespannungsverlauf während eines Ladevorgangs des Energiespeichers 5 gemäß einer grundsätzlich bekannten Ausführung einer Batterieladevorrichtung dar.

Gezeigt ist ein Ladeverfahren mit einem konstanten Ladestrom (englisch: Constant-Current-Algorithmus; abgekürzt: CC-Algorithmus), wie es gegenwärtig in Notstromversorgungen für Gebäudetechniksysteme, zum Beispiel in Notleuchten genutzt wird. Die Darstellung erfolgt am Beispiel eines Energiespeichers 5 mit einer Zelle 6 in Form einer LFP-Zelle.

Auf der Abszisse der Darstellung nach Fig. 5 ist die Zeit t aufgetragen. In Richtung der Ordinate ist zum einen die Spannung U für die Darstellung des Verlaufs der Zellspannung U_{ZELLE} dargestellt. Zum anderen ist in Richtung der Ordinate der Strom zur Darstellung des Verlaufs des Ladestroms I_{ZELLE} aufgetragen.

Die Darstellung der Verläufe der Zellspannung U_{ZELLE} und des Ladestroms I_{ZELLE} beginnt bei einer weitgehend entladenen Zelle 6.

Die Batterieladevorrichtung erkennt eine nicht vollständig geladenen Zelle 6 und startet einen Ladevorgang mit einem konstantem Ladestrom I_{CC}. Im gewählten Beispiel kann der Ladestrom I_{CC} zum Beispiel 0.086C bis 0.1C betragen. In der Batterietechnik wird der Ladestrom üblich auf die Batteriekapazität C normiert. Ein Ladestrom I_{CC} in Höhe von 1C entspricht dabei einem Wert des Ladestroms I_{ZELLE}, der den Energiespeicher 5 in einer Zeit von 1 h vollständig lädt. Für einen Energiespeicher 5 mit einer Kapazität von 100 Ah entspräche dies einem Wert des Ladestroms I_{CC} in Höhe von 100 A.

Im betrachteten Fall der LFP-Zelle bewirkt der konstante Ladestrom I_{CC} = 0.086C bis 0.1 C ein Aufladen des Energiespeichers 5 in weniger als 12 h.

Während des Ladevorgangs überwacht die Ladevorrichtung die Zellspannung U_{ZELLE}, die im gezeigten Fall im Wesentlichen linear über die Zeit t ansteigt. Erreicht die überwachte Zellspannung U_{ZELLE} einen Wert U_{MAX}, so wird der Ladevorgang beendet. Ein Ladeschaltkreis der Batterieladevorrichtung wird abgeschaltet, und der Ladestrom I_{CC} ist Null.

Für eine LFP-Zelle kann die Spannung U_{MAX} 3.60 V betragen.

Die Zelle 6 ist nun geladen. Die Kapazität des Energiespeichers 5, hier der Zelle 6, und die Zellspannung U_{ZELLE} kann aufgrund von Entnahme von Energie aus der Zelle 6 für Verbraucher oder über eine Selbstentladung sinken. Die Batterieladevorrichtung überwacht die Zellspannung U_{ZELLE}. Sinkt die die überwachte Zellspannung U_{ZELLE} unter einen Wert von U_{T}= 3.40 V, so startet die Batterieladevorrichtung automatisch eine Ladevorgang, um die Zelle 6 erneut zu laden.

Der erneute Ladevorgang im betrachteten Fall der LFP-Zelle erfolgt mit dem konstante Ladestrom I_{CC} = 0.086C bis 0.1 C und bewirkt ein Aufladen des Energiespeichers 5 mit einer Wiederladezeit T_{WIEDERLADEN} < 1 h. Während des Ladevorgangs überwacht die Ladevorrichtung die linear über die Zeit t ansteigende Zellspannung U_{ZELLE}. Erreicht die überwachte Zellspannung U_{ZELLE} den Wert U_{MAX}, so wird der Ladevorgang beendet. Ein Ladeschaltkreis der Batterieladevorrichtung wird abgeschaltet, und der Ladestrom I_{CC} ist Null.

Die Zeit für die Selbstentladung der Zelle 6 ist temperatur- und ladezustandsabhängig. Im Fall der LFP-Zelle beträgt die Zeit für eine Selbstentladung, die einem Abfall der Zellspannung U_{ZELLE} von 3.60 V auf 3.40 V bei einer Temperatur von 25°C bei anfangs vollständig geladenen Zelle 6 entspricht, in der Regel mehr als 12 h.

Einhalten der in Fig. 5 dargestellten Schutzspannung U_{SCHUTZ} durch die Batteriespannung U_{BATT} kann durch eine Energiespeicher-interne Schutzschaltung überwacht werden. Erreicht oder überschreitet die Batteriespannung U_{BATT} die Schutzspannung U_{SCHUTZ}, so öffnet die Schutzschaltung einen Schalter und trennt den Energiespeicher 5 von der Batterieladevorrichtung, um den Energiespeicher 5 und die empfindliche Zelle 6 vor Überspannung zu schützen.

Die Schutzspannung ist insbesondere von der Batteriechemie der Zelle 6 abhängig. Für das betrachtete Beispiel der LFP-Zelle beträgt die Schutzspannung typisch 3.90 V ± 0.25 V.

Die vorgeschlagene Batterieladevorrichtung 1 und das vorgestellte Batterieladeverfahren sind in ihrer gewerblichen Anwendung nicht auf einen Energiespeicher 5 in Lithium-Eisenphosphat-Technologie (LFP-Technologie) beschränkt, sondern sind in entsprechender Weise auch für andere lithiumbasierte Akkumulatoren, wie beispielsweise Lithium-Titan-, Lithium Nickel-Mangan-Kobalt-, oder Silizium-Kobaltdioxid-Technologie vorteilhaft anwendbar.

## Patentansprüche

1. Verfahren zur Steuerung einer Batterieladevorrichtung (1) für einen Ladevorgang zumindest eines Energiespeichers (5) mit zumindest einer Zelle (6) auf Lithium-Basis, das Verfahren umfassend
Ermitteln einer Zellspannung (U_{ZELLE}) der Zelle (6),
Zuführen eines konstanten Ladestroms (I_{CC}) an die Zelle (6) und Überwachen der Zellspannung (U_{ZELLE}), wenn die ermittelte Zellspannung (U_{ZELLE}) kleiner als ein erster Schwellenwert (U_{T}) ist, Zuführen eines Ladestroms (I_{CP}) kleiner als der konstante Ladestrom (I_{CC}) an die Zelle (6) und Überwachen der Zellspannung (U_{ZELLE}), wenn die Zellspannung (U_{ZELLE}) größer als ein zweiter Schwellenwert (U_{T2}) ist,
**dadurch gekennzeichnet,**
**dass** das Verfahren eine Temperatur des Energiespeichers (5) ermittelt, und den zweiten Schwellenwert (U_{T2}) in Abhängigkeit von der ermittelten Temperatur einstellt.

2. Verfahren nach Anspruch 1, wobei
dass für geringere Werte der ermittelten Temperatur des Energiespeichers (5) der zweite Schwellenwert (U_{T2}) vergrößert wird.

3. Verfahren nach Anspruch 1 oder 2, wobei
wenn die überwachte Zellspannung (U_{ZELLE}) gleich oder größer als eine maximale Ladespannung (U_{MAX}) ist, Anlegen der maximalen Ladespannung (U_{MAX}) an die Zelle (6) und Überwachen des der Zelle (6) zugeführten Ladestroms (I_{CV}), und,
wenn der überwachte Ladestrom (I_{CV}) kleiner oder gleich einem Zielstromwert (I_{T}) ist, Beenden des Ladevorgangs des Energiespeichers (5).

4. Verfahren nach einem der vorhergehenden Ansprüche, wobei
der zweite Schwellenwert (U_{T2}) zusätzlich in Abhängigkeit von einer ermittelten Temperatur der Batterieladevorrichtung (1) zu der ermittelten Temperatur des Energiespeichers (5) eingestellt wird.

5. Verfahren nach einem der vorhergehenden Ansprüche, wobei
wenn die ermittelte Temperatur des Energiespeichers (5) und/oder der Batterieladevorrichtung (1) einen festgelegten Temperaturgrenzwert unterschreiten, der Ladevorgang mit
Zuführen des konstanten Ladestroms (I_{CC}) an die Zelle (6) und Überwachen der Zellspannung (U_{ZELLE}), auch wenn die Zellspannung (U_{ZELLE}) größer als der zweite Schwellenwert (U_{T2}) ist, fortgesetzt wird.

6. Verfahren nach einem der vorhergehenden Ansprüche, wobei
der zugeführte Ladestrom (I_{CP}) kleiner als der konstante Ladestrom (I_{CC}) abhängig von einer Zunahme der Zellspannung (U_{ZELLE}) verringert wird.

7. Verfahren nach Anspruch 6, wobei
der zugeführte Ladestrom (I_{CP}) kleiner als der konstante Ladestrom (I_{CC}) abhängig von einer Zunahme der Zellspannung (U_{ZELLE}) derart verringert wird, dass eine der Zelle (6) zugeführte Ladeleistung konstant ist.

8. Verfahren nach einem der vorhergehenden Ansprüche, wobei
der konstante Ladestrom (I_{CC}) in Abhängigkeit von einem vorgegebenen minimalen Ladezustand des Energiespeichers (6), und/oder von einer vorgegebenen herstellungsbedingten Toleranz für den vorgegebenen minimalen Ladezustand des Energiespeichers (5) bestimmt wird.

9. Verfahren einem der vorhergehenden Ansprüche, wobei
der konstante Ladestrom (I_{CC}) größer als ein entsprechender Ladestrom eines bekannten CC-CV Ladealgorithmus gewählt wird, insbesondere größer als 0.086C bis 0.1C.

10. Batterieladevorrichtung für einen Energiespeicher (5) mit zumindest einer Zelle (6) auf Lithium-Basis, die Batterieladevorrichtung umfassend
eine Batterieschnittstelle (BATT+, BATT-, TBATT), ausgelegt für eine Verbindung zu dem Energiespeicher (5),
einen Konverterschaltkreis (2) ausgelegt dafür, abhängig von einem Ladesteuersignal (10) einen Ladestrom (I_{CC}, I_{CP}) für den Energiespeicher (5) zu erzeugen und über die Batterieschnittstelle (BATT+, BATT-) auszugeben,
einen Steuerschaltkreis (3), ausgelegt dafür, eine Zellspannung (U_{ZELLE}) der Zelle (6) und den dem Energiespeicher (6) zugeführten Ladestrom (I_{CC}, I_{CP}) zu erfassen, und das Ladesteuersignal (10) auf Basis der erfassten Zellspannung (U_{ZELLE}) und des erfassten Ladestroms (I_{CC}, I_{CP}) zu erzeugen und an den Konverterschaltkreis (2) auszugeben,
wobei, wenn die erfasste Zellspannung (U_{ZELLE}) kleiner als ein erster Schwellwert (U_{T}) ist, der Konverterschaltkreis (2) ausgelegt ist, einen konstanten Ladestrom (I_{CC}) über die Batterieschnittstelle (BATT+, BATT-) auszugeben, und
wenn die erfasste Zellspannung (U_{ZELLE}) größer als ein zweiter Schwellenwert (U_{T2}) ist, der Konverterschaltkreis (2) ausgelegt ist, einen Ladestrom (I_{CP}) kleiner als der konstante Ladestrom (I_{CC}) über die Batterieschnittstelle (BATT+, BATT-) auszugeben, und
**dadurch gekennzeichnet,**
**dass** der Steuerschaltkreis (3) dafür ausgelegt ist, über die Batterieschnittstelle (TBATT) ein Temperaturmesssignal des Energiespeichers (5) zu erfassen, und
den zweiten Schwellenwert (U_{T2}) in Abhängigkeit von einer ermittelten Temperatur des Energiespeichers (6) einzustellen.

11. Batterieladevorrichtung nach Anspruch 10, wobei die Batterieladevorrichtung ausgebildet ist, das Verfahren zur Steuerung der Batterieladevorrichtung nach einem der Ansprüche 1 bis 9 auszuführen.

12. Notstromversorgung für ein Beleuchtungssystem, umfassend zumindest einen Energiespeicher (5) auf Lithium-Basis, und zumindest eine Batterieladevorrichtung (1) nach Anspruch 10 oder 11.
